# EUROPÄISCHE PATENTANMELDUNG

(11) **EP 1 310 318 A1**
(43) Veröffentlichungstag der Anmeldung: **14.05.2003**
(21) Anmeldenummer: 02022067.9
(22) Anmeldetag: 02.10.2002
(51) Int. Cl.: B23K 9/10

(54) **Elektrisches Steuergerät für eine Schweissstromquelle**

(30) Priorität: 08.11.2001 DE 10155000
(71) Anmelder: Lorch Schweisstechnik GmbH, 71549 Auenwald (DE)
(72) Erfinder: Jaeschke, Birger, 71522 Backnang (DE); Mandel, Uwe, 15537 Grünheide (Mark) (DE)
(74) Vertreter: Patentanwalts-Partnerschaft, Rotermund + Pfusch + Bernard

(57) **Zusammenfassung**

Das Steuergerät (100) kann einerseits mit einer herkömmlichen Bedieneinheit (3), die im wesentlichen aus einem elektrischen Schließkontakt (16) besteht und andererseits mit einer alternativen Anzeige- und/oder Bedieneinheit (4) zusammenwirken, die eine Vielzahl von Signalen zu erzeugen und auszuwerten vermag.

## Beschreibung

Die Erfindung betrifft ein für ein Arbeitsgerät, insbesondere eine elektrische Schweißstromquelle, geeignetes elektrisches Steuergerät mit zumindest zweipoligem elektrischen Anschluß für eine Bedieneinheit.

Bei vielen auf dem Markt erhältlichen Schweißgeräten für das MIG- bzw. MAG- oder WIG-Schweißen kann zwar die Schweißstromquelle oftmals in vielfältiger Weise gesteuert oder programmiert werden. Jedoch ist am Schweißbrenner regelmäßig nur ein einziges Bedienelement in Form einer Taste angeordnet, welche einen elektrischen Schließer-Kontakt steuert, über den der Schweißstrom ein- bzw. ausgeschaltet werden kann. Dazu ist der Schließer-Kontakt über entsprechende Verbindungskabel elektrisch zwischen zwei zugeordnete Steueranschlüsse der Schweißstromquelle geschaltet, so daß diese Anschlüsse durch Betätigung der Taste miteinander elektrisch verbunden oder voneinander getrennt werden können. Auf diese Weise lassen sich Relais od.dgl. der Schweißstromquelle zum Ein- und Ausschalten des Schweißstromes vom Schweißbrenner aus betätigen.

Grundsätzlich ist es erwünscht und auch bekannt, am Schweißbrenner vergleichsweise aufwendige Bedieneinheiten anzuordnen, um einen weitergehenden Signalaustausch zwischen der Bedieneinheit und der Steuerung der Schweißstromquelle zu ermöglichen. In diesem Zusammenhang kann beispielsweise auf die EP 0 575 082 A2 verwiesen werden, in der die Möglichkeit des Austausches von Hochfrequenzsignalen zwischen der Bedieneinheit der Steuerung der Schweißstromquelle aufgezeigt wird. Des weiteren ist es aus der WO 99/36219 bekannt, Schweißstromquelle und Schweißbrenner an einen seriellen Datenbus anzuschließen, um einen umfangreichen Datenaustausch zu ermöglichen.

Für alle diese bekannten Schweißgeräte ist typisch, daß nur eine einzige Art der Bedieneinheit mit der Steuerung der jeweiligen Schweißstromquelle kompatibel ist.

Aufgabe der Erfindung ist es nun, eine größere Flexibilität bei der Kombination von Geräteeinheiten zu ermöglichen.

Diese Aufgabe wird erfindungsgemäß bei einer Steuerung der eingangs angegebenen Art durch eine mit dem zumindest zweipoligen Anschluß verbundene, elektrisch belastbare Schnittstellenschaltung gelöst, welche
- einen Lastzustand mit zwischen zwei Anschlußpolen eingeschalteter elektrischer Last,
- einen Kurzschlußzustand mit Kurzschlußverbindung zwischen den Anschlußpolen sowie
- einen Leerlaufzustand mit elektrisch unbelasteten Anschlußpolen
   zu unterscheiden vermag und
- einerseits bei Anschluß einer Standardbedieneinheit mit zwischen den Anschlußpolen wirksamem Schließkontakt das Arbeitsgerät zwischen zwei Betriebszuständen (Ein, Aus) umzusteuern gestattet und
- andererseits bei Anschluß einer alternativen Anzeigeund/oder Bedieneinheit, die als zwischen den Anschlußpolen wirksame elektrische Last ausgebildet ist, einen Austausch vorgegebener Signale für eine Vielzahl von Betriebszuständen des Arbeitsgerätes und/oder Anzeigen ermöglicht.

Die Erfindung beruht auf dem allgemeinen Gedanken, die elektrische Steuerung als kurzschlußsichere elektrische Strom- bzw. Spannungsquelle mit ausgeprägt lastabhängiger Strom- bzw. Spannungscharakteristik auszubilden. Damit kann einerseits eine als elektrische Last wirksame alternative Anzeige- und/oder Bedieneinheit angeschlossen und mit elektrischer Energie versorgt und andererseits auch eine als einfacher Schließkontakt ausgebildete herkömmliche Bedieneinheit eingesetzt und von der alternativen Bedieneinheit unterschieden werden, wenn Mittel zur Erfassung der Strom- bzw. Spannungsverhältnisse an den Anschlußpolen vorhanden sind.

Die elektrischen Strom- bzw. Spannungsverhältnisse an den Anschlußpolen der Steuerung für die Bedieneinheit haben also eine Doppelfunktion. Einerseits zeigen sie die Art der angeschlossenen Bedieneinheit an. Andererseits werden der Leerlauf- und der Kurzschlußzustand auch als Stellsignale für zwei alternative Betriebszustände, z.B. eingeschalteter oder ausgeschalteter Schweißstrom, ausgenutzt. Darüber hinaus können beim Lastzustand von der Schnittstellenschaltung und/oder der alternativen Anzeige- und/oder Bedieneinheit erzeugte Signale ausgewertet werden.

Hierbei bietet die Erfindung den Vorteil, daß bei Einsatz der alternativen Anzeige und/oder Bedieneinheit, welche aufgrund des von ihr bewirkten Lastzustandes von der Steuerung erkannt werden kann, über die Anschlußpole prinzipielle beliebige elektrische Signale übermittelt bzw. dem Laststrom überlagert werden können.

Ein besonderer Vorteil der Erfindung liegt darin, daß die alternative Bedieneinheit keine eigene elektrische Stromquelle benötigt. Vielmehr erfolgt die Versorgung mit elektrischer Energie ausschließlich über die elektrische Steuerung.

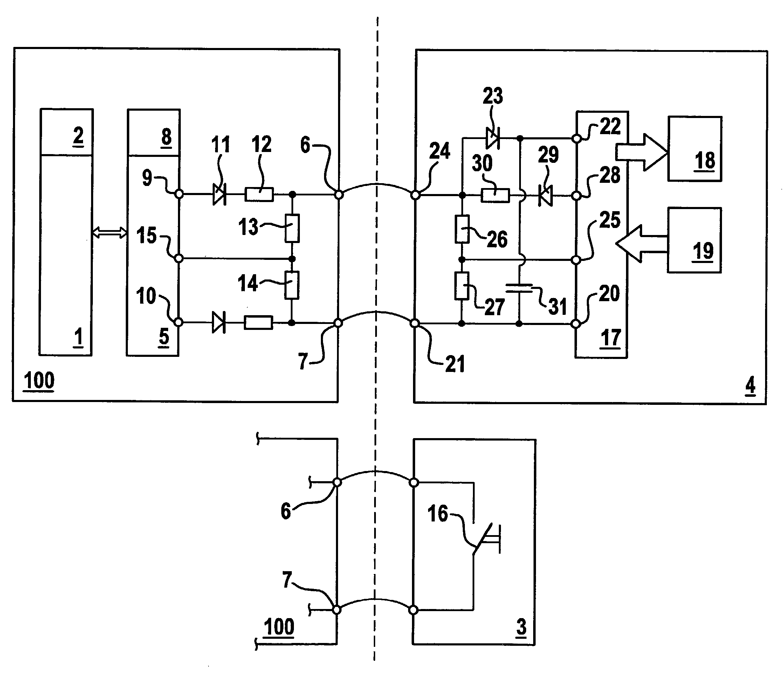

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform näher beschrieben wird.

Dabei zeigt die einzige Figur eine schaltplanartige Darstellung des erfindungsgemäßen Steuerungssystems in Anwendung auf ein elektrisches Schweißgerät.

Eine nicht näher dargestellte Schweißstromquelle besitzt ein Steuergerät 100 mit einer elektrischen bzw. elektronischen Steuerung 1, die sich mit einer grundsätzlich bekannten Bedieneinheit 2 auf gewünschte Schweißparameter einstellen oder programmieren läßt.

Außerdem kann die Steuerung 1 mit entfernt, insbesondere am nicht dargestellten Schweißbrenner oder nahe des Schweißarbeitsplatzes angeordneten Befehlsgeber- und/oder Anzeigeeinheiten 3 und 4 zusammenwirken, die weiter unten erläutert werden.

Für die Kommunikation mit den Einheiten 3 und 4 besitzt die Steuerung 1 eine Schnittstellenschaltung 5 mit zwei Anschlußpolen 6 und 7 für eine zweipolige Verbindungsleitung zu den Befehlsgeber- bzw. Anzeigeeinheiten 3 und 4.

Die Schnittstellenschaltung 5 hat eine Doppelfunktion, indem sie einerseits als belastbare elektrische Stromquelle ausgebildet ist und zwischen den Anschlußpolen 6 und 7 eine elektrische Versorgungsspannung erzeugt, so daß ein an den Anschlußpolen 6 und 7 angeschlossenes elektrisches Gerät mit der zu dessen Betrieb notwendigen elektrischen Energie versorgt werden kann. Hierzu wird die Schnittstellenschaltung ihrerseits von einer elektrischen Versorgungsschaltung 8 mit elektrischer Energie beliefert. Andererseits kann die Schnittstellenschaltung 5 über die Anschlußpole 6 und 7 Signale senden und empfangen.

Im dargestellten Beispiel besitzt die Schnittstellenschaltung 5 zwei auf unterschiedlichem elektrischen Potential gehaltene Anschlüsse 9 und 10, zwischen denen ein Strompfad mit einer Entkopplungsdiode 11, einem dazu in Reihe angeordneten Strombegrenzungswiderstand 12 sowie zwei weiteren in Reihe angeordneten Widerständen 13 und 14 angeordnet ist, wobei der Anschlußpol 6 zwischen dem Strombegrenzungswiderstand 12 und dem Widerstand 13 angeschlossen und der Anschlußpol 7 mit dem Anschluß 10 verbunden ist. Zwischen den Widerständen 13 und 14 ist ein Signaleingang 15 der Schnittstellenschaltung 5 angeordnet.

Liegt zwischen den Anschlüssen 9 und 10 eine elektrische Spannung in Durchlaßrichtung der Entkopplungsdiode 11 an, fließt über den vorgenannten Strompfad ein durch die Widerstände 12 bis 14 sowie die elektrische Spannung zwischen den Anschlüssen 9 und 10 vorgegebener Strom, wobei am Eingang 15 der Schnittstellenschaltung 5 eine von der Spannung zwischen den Anschlußpolen 6 und 7 sowie der Bemessung der Widerstände 13 und 14 abhängige Spannung anliegt.

Wie nachfolgend dargestellt wird, ist diese Spannung auch ein Signal, welches wiedergibt, ob eine bzw. welche der Einheiten 3 und 4 an die Anschlußpole 6 und 7 angeschlossen ist.

Zunächst wird der Fall betrachtet, daß hier der Befehlsgeber 3 angeschlossen ist.

Der Befehlsgeber 3, welcher lediglich einen durch eine Taste betätigten elektrischen Schließkontakt 16 aufweist, ist allgemein bekannt und an vielen Schweißbrennern angeordnet. Bisher wurde mit dem Schließkontakt 16 ein Relais zum Ein- bzw. Abschalten des Schweißstromes gesteuert.

Wird nun der Befehlsgeber 3 mit der erfindungsgemäßen Steuerung 1 verbunden, liegt der Schließkontakt 16 elektrisch zwischen den Anschlußpolen 6 und 7. Mittels des Schließkontaktes 16 kann somit ein Kurzschluß zwischen den Anschlußpolen 6 und 7 erzeugt werden. Dies hat zur Folge, daß der Spannungspegel am Signaleingang 15 auf den Pegel des Anschlusses 10 der Schnittstellenschaltung 5 abfällt.

Die Schnittstellenschaltung 5 kann dies als Befehlssignal zum Einschalten des Schweißstromes erkennen und leitet dementsprechend an die Steuerung 1 ein Signal "Schweißstrom einschalten" weiter. Wenn der Schließkontakt 16 geöffnet wird oder ist, liegt am Signaleingang 15 eine charakteristische Spannung für unbelastete Anschlußpole 6 und 7 an, d.h. für einen Leerlaufzustand der Schnittstellenschaltung 5. Dieser Zustand wird von der Schnittstellenschaltung 5 als Signal dafür erkannt, daß kein Schweißstrom fließen soll. Dementsprechend leitet die Schnittstellenschaltung 5 an die Steuerung ein Befehlssignal "Schweißstrom aus" weiter.

Nunmehr möge die erfindungsgemäße Befehlsgeber- und Anzeigeeinheit 4 an die Anschlußpole 6 und 7 angeschlossen sein. Diese Einheit 4 kann mit einem Schweißbrenner kombiniert oder am Schweißarbeitsplatz angeordnet sein.

Die Einheit 4 benötigt zu ihrem Betrieb elektrische Energie, welche von der Schnittstellenschaltung 5 über die Anschlußpole 6 und 7 geliefert wird. Dementsprechend stellt die Einheit 4 eine (von einem Kurzschlußzustand abweichende) elektrische Last zwischen den Anschlußpolen 6 und 7 dar. Dies hat zur Folge, daß am Signaleingang 15 der Schnittstellenschaltung 5 ein Spannungspegel auftritt, welcher sich von dem für den Leerlaufzustand charakteristischen Spannungspegel und vom Pegel am Anschluß 10 unterscheidet.

Damit "weiß" die Schnittstellenschaltung 5, daß eine zum Datenaustausch vorgesehene Befehlsgeber- und Anzeigeeinheit 4 an den Anschlußpolen 7 angeschlossen ist.

Die Befehlsgeber- und Anzeigeeinheit 4 besitzt eine Steuerschaltung 17, die einerseits eine Anzeige 18 zu steuern vermag und andererseits über Bedienelemente 19 Steuerbefehle entgegennimmt.

Die Steuerschaltung 17 ist über einen Anschluß 20 mit einem Anschlußpol 21 der Befehlsgeber- und Anzeigeeinheit 4 verbunden, wobei dann der Anschlußpol 21 über ein Kabel mit dem Anschlußpol 7 der Steuerung 1 elektrisch gekoppelt ist. Des weiteren besitzt die Steuerschaltung 17 einen Versorgungsanschluß 22, der über eine zur Entkopplungsdiode 11 der Steuerung 1 gleichgerichtete Entkopplungsdiode 23 mit einem Anschlußpol 24 verbunden ist, der seinerseits über ein Kabel mit dem Anschlußpol 6 der Steuerung 1 kommuniziert. Damit kann die Steuerschaltung 17 mit elektrischer Energie versorgt werden.

Des weiteren besitzt die Steuerschaltung 17 einen Signaleingang 25, der zwischen zwei in Reihe liegenden Widerständen 26 und 27 angeschlossen ist, die ihrerseits die Anschlußpole 21 und 24 miteinander verbinden.

Außerdem besitzt die Steuerschaltung 17 einen Signalausgang 28, der über eine der Entkopplungsdiode 11 der Steuerung 1 entgegengerichtete Entkopplungsdiode 29 und einen dazu in Reihe angeordneten Strombegrenzungswiderstand 30 mit dem Anschlußpol 24 verbunden ist.

Schließlich ist zwischen dem Versorgungsanschluß 22 und dem Anschluß 20 noch ein Pufferkondensator 31 angeordnet.

Der Signalaustausch zwischen Steuerung 1 und Befehlsgeberund Anzeigeeinheit 4 ist nunmehr wie folgt möglich:

Die Schnittstellenschaltung 5 kann über den Anschluß 9 Signale abgeben, die die zwischen den Anschlüssen 9 und 10 vorhandene elektrische Spannung überlagern. Diese Signale durchsetzen einerseits die Entkopplungsdiode 23, werden jedoch vom Versorgungsanschluß 22 gleichwohl ferngehalten, weil der Pufferkondensator 31 Pegelschwankungen am Versorgungsanschluß 22 glättet.

Die vorgenannten Signale bewirken jedoch auch Pegelschwankungen am Signaleingang 25, so daß die Steuerschaltung 17 hier die von der Schnittstellenschaltung 5 abgesetzten Signale "erkennen" und dementsprechend beispielsweise die Anzeige 18 steuern kann.

In umgekehrter Signalrichtung kann die Steuerschaltung 17 Signale, die beispielsweise mittels der Bedienelemente 19 vorgegeben werden, über den Signalausgang 28 absetzen. Diese elektrischen Signale, die von der in dieser Signalrichtung sperrenden Entkopplungsdiode 11 am Anschluß 9 der Schnittstellenschaltung 5 vom Anschluß 9 der Schnittstellenschaltung 5 ferngehalten werden, verursachen entsprechende Pegelschwankungen am Signaleingang 15 der Schnittstellenschaltung 5, so daß die Schnittstellenschaltung 5 die vorgenannten Signale "erkennen" und dementsprechend die Steuerung 1 betätigen kann, die dann ihrerseits wiederum die Schweißstromquelle od.dgl. steuert.

## Patentansprüche

1. Für ein Arbeitsgerät, insbesondere eine elektrische Schweißstromquelle, geeignetes elektrisches Steuergerät (100) mit zumindest zweipoligem elektrischen Anschluß (6,7) für eine Bedieneinheit (3,4) sowie mit dem Anschluß verbundener, elektrisch belastbarer Schnittstellenschaltung (5), welche
- einen Lastzustand mit zwischen zwei Polen des Anschlusses (6,7) eingeschalteter elektrischer Last,
- einen Kurzschlußzustand mit Kurzschlußverbindung zwischen den vorgenannten Polen (6,7) sowie
- einen Leerlaufzustand mit elektrisch unbelasteten Anschlußpolen (6,7)
zu unterscheiden vermag und
- einerseits bei Anschluß einer Standardbedieneinheit (3) mit zwischen den Anschlußpolen (6,7) wirksamem Schließkontakt (16) das Arbeitsgerät zwischen zwei Betriebszuständen (Ein, Aus) umzusteuern gestattet und
- andererseits bei Anschluß einer alternativen Anzeigeund/oder Bedieneinheit (4), die als zwischen den Anschlußpolen (6,7) wirksame elektrische Last ausgebildet ist, einen Austausch vorgegebener Signale für eine Vielzahl von Betriebszuständen des Arbeitsgerätes und/oder Anzeigen ermöglicht.

2. Steuergerät nach Anspruch 1,
**dadurch gekennzeichnet,**
**daß** der Signalaustausch zwischen Schnittstellenschaltung (5) und alternativer Anzeige- und/oder Bedieneinheit (4) über die Anschlußpole (6,7) bzw. daran angeschlossene Versorgungsleitungen für die vorgenannte Einheit (4) erfolgt.

3. Steuergerät nach Anspruch 1 oder 2,
**dadurch gekennzeichnet,**
**daß** die Schnittstellenschaltung (5) einen Signaleingang (15) sowie einen separaten Signalausgang (9) aufweist, der gegenüber ankommenden Signalen entkoppelt ist.

4. Steuergerät nach Anspruch 3,
**dadurch gekennzeichnet,**
**daß** zur Entkopplung eine Diode (11) angeordnet ist.

5. Anzeige- und/oder Bedieneinheit (4) für ein Steuergerät (100) nach einem der Ansprüche 1 bis 4,
**gekennzeichnet**
**durch** eine elektrische bzw. elektronische Steuerschaltung (17), deren Anschlußleitungen für die Zufuhr der elektrischen Energie auch als Signalleitungen angeordnet sind.

6. Anzeige- und/oder Bedieneinheit nach Anspruch 5,
**dadurch gekennzeichnet,**
**daß** die Steuerschaltung (17) einen Signaleingang (25) sowie einen davon entkoppelten Signalausgang (28) aufweist.

7. Anzeige- und/oder Bedieneinheit nach Anspruch 6,
**dadurch gekennzeichnet,**
**daß** zur Entkopplung eine Diode (29) angeordnet ist.
